# EUROPEAN PATENT SPECIFICATION

(11) **EP 3 738 683 B1**
(45) Date of publication and mention of the grant of the patent: **09.03.2022**
(21) Application number: 20172104.0
(22) Date of filing: 29.04.2020
(51) Int. Cl.: B06B 1/04, H02K 33/16

(54) **VIBRATION GENERATOR WITH A MAGNET BETWEEN UPPER AND LOWER YOKE**
VIBRATIONSGENERATOR MIT EINEM MAGNETEN ZWISCHEN EINEM OBEREN UND UNTEREN JOCH
GÉNÉRATEUR DE VIBRATIONS AVEC UN AIMANT ENTRE UNE CULASSE SUPÉRIEURE ET UNE CULASSE INFÉRIEURE

(30) Priority: 13.05.2019 JP 2019090497; 28.11.2019 JP 2019215233
(43) Date of publication of application: 18.11.2020
(73) Proprietor: Alps Alpine Co., Ltd., Ota-ku Tokyo 145-8501 (JP)
(72) Inventor: MAEDA, Masanobu, Tokyo, 145-8501 (JP); SUZUKI, Katsutoshi, Tokyo, 145-8501 (JP)
(74) Representative: Maiwald Patent- und Rechtsanwaltsgesellschaft mbH

(56) References cited:
- US-A1- 2006 133 218
- US-A1- 2012 153 748
- US-A1- 2013 099 602
- US-A1- 2016 218 607
- US-A1- 2017 104 401

## Description

### TECHNICAL FIELD

The present invention relates to a vibration generator.

### BACKGROUND ART

Some mobile electronic equipment, such as mobile phones and game consoles, are equipped with vibration generators that generate vibrations for notifying users of incoming calls or providing users with tactile feel in accordance with the game situations. As such vibration generators, a vibration generator that includes a magnet and causes the magnet to vibrate is disclosed (Patent Document 1, for example). In the vibration generator disclosed in Patent Document 1, the magnet is disposed on a plate spring that is formed by bending a metal plate in different directions.

### [RELATED-ART DOCUMENTS]

### [PATENT DOCUMENTS]

[Patent Document 1] Japanese Laid-Open Patent Publication No. 2010-207731

US 2006/133218 A1 describes a vibrating device mounted in a portable object. The device includes a moving mass formed in part by a magnetic structure connected to a fixed structure via a spring element, and a coil connected to the fixed structure without any mechanical contact with the moving mass.

US 2013/099602 A1 describes a linear vibrator including a case providing an inner space, a stator including a circuit board arranged on the case and a coil block electrically connected to the circuit board, an integral spring including a plate opposite to the circuit board and springs vibratingly fixing both distal ends of the plate to the case, a yoke arranged on the integral spring in opposition to the circuit board, and a vibrator including a weight coupled to the yoke and a magnet coupled to the weight in opposition to the coil block.

### SUMMARY OF THE INVENTION

### PROBLEM TO BE SOLVED BY THE INVENTION

In the above-described vibration generator, because the plate spring is formed by bending a metal plate a plurality of times in different directions, a plurality of molds and a plurality of pressing process are required, thus making it difficult to manufacture the vibration generator.

In view of the above-described problem, it is an object of the present invention to provide a vibration generator that can be readily manufactured.

### MEANS TO SOLVE THE PROBLEM

The invention is defined by the appended claims.

According to an aspect of an embodiment of the present invention, a vibration generator includes a housing; a vibrator; an elastic member that connects the housing and the vibrator; and a driver that causes the vibrator to vibrate. The elastic member includes a housing connection portion that is connected to the housing, a vibrator support portion that supports the vibrator, and a spring portion that connects the housing connection portion and the vibrator support portion. The housing connection portion and the vibrator support portion are in the same plane. The spring portion is formed so as to be approximately perpendicular to the housing connection portion and the vibrator support portion.

### EFFECTS OF THE INVENTION

According to the present disclosure, it is possible to provide a vibration generator that can be readily manufactured without requiring a plurality of molds and a plurality of pressing processes.

### BRIEF DESCRIPTION OF THE DRAWINGS

FIG. 1 is a perspective view of a vibration generator according to a first embodiment;
FIG. 2 is an exploded perspective view of the vibration generator according to the first embodiment;
FIG. 3 is a perspective view of a housing of the vibration generator according to the first embodiment;
FIG. 4 is a top view of the housing of the vibration generator according to the first embodiment;
FIG. 5 is a perspective view of a coil and a bracket according to the first embodiment;
FIG. 6 is an exploded perspective view of a vibrator of the vibration generator according to the first embodiment;
FIG. 7 is a perspective view of a coil, a bracket, and the vibrator of the vibration generator according to the first embodiment;
FIG. 8 is a front view of the coil, the bracket, and the vibrator of the vibration generator according to the first embodiment;
FIG. 9 is a perspective view of an elastic member of the vibration generator according to the first embodiment;
FIG. 10 is a diagram that depicts an elastic member of the vibration generator according to the first embodiment;
FIG. 11 is a diagram that depicts a magnetic field generated in the vibration generator according to the first embodiment;
FIG. 12 is a front view of the vibration generator according to the first embodiment;
FIG. 13 is a diagram (1) that depicts the vibration generator according to the first embodiment;
FIG. 14 is a diagram (2) that depicts the vibration generator according to the first embodiment;
FIG. 15 is perspective view of an elastic member according to a variation of the vibration generator according to the first embodiment;
FIG. 16 is a perspective view of a vibration generator according to a second embodiment;
FIG. 17 is a perspective view of a housing of the vibration generator according to the second embodiment;
FIG. 18 is a diagram that depicts the vibration generator according to the second embodiment; and
FIG. 19 is a perspective, cross-sectional view of the vibration generator according to the second embodiment.

### MODE FOR CARRYING OUT THE INVENTION

In the following, embodiments will be described. The same members are denoted by the same reference numerals, and a description thereof will not be repeated. Further, in the present application, an X1-X2 direction, a Y1-Y2 direction, and a Z1-Z2 direction are mutually perpendicular directions. Further, a plane including the X1-X2 direction and the Y1-Y2 direction is referred to as a XY-plane, a plane including the Y1-Y2 direction and the Z1-Z2 direction is referred to as a YZ-plane, and a plane including the Z1-Z2 direction and the X1-X2 direction is referred to as a ZX-plane.

### [First Embodiment]

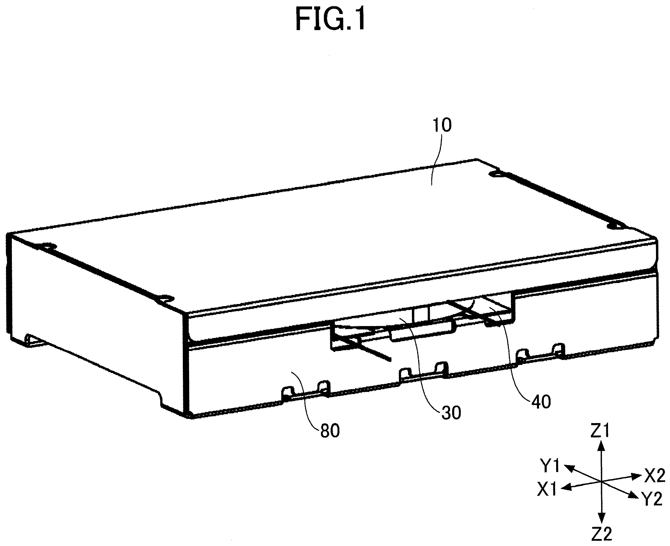

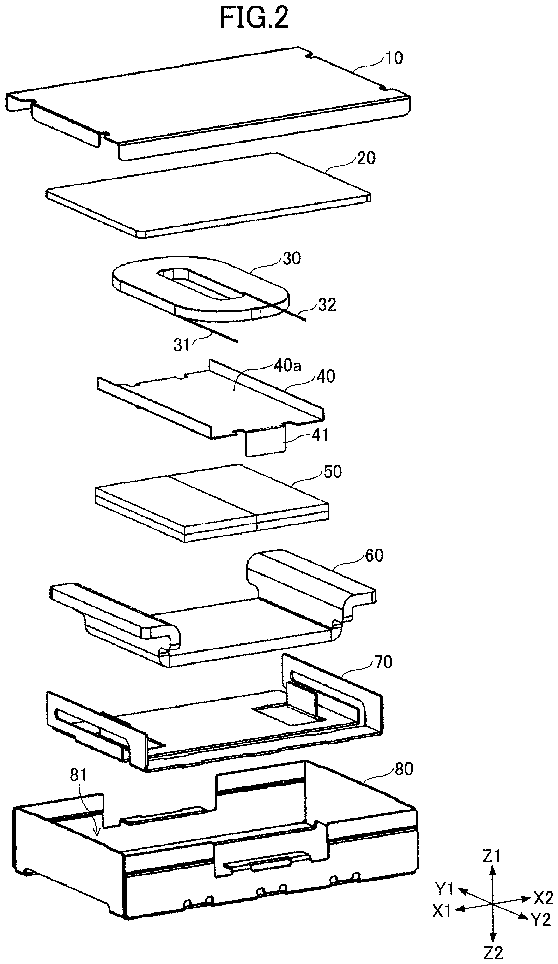

A vibration generator according to a first embodiment will be described with reference to FIG. 1 and FIG. 2. FIG. 1 is a perspective view of the vibration generator according to the first embodiment. FIG. 2 is an exploded perspective view of the vibration generator according to the first embodiment. The vibration generator according to the first embodiment includes a cover 10, an upper yoke 20, a coil 30, a bracket 40, a magnet 50, a lower yoke 60, an elastic member 70, and a housing 80. Note that, in the present embodiment, the cover 10, the bracket 40, the elastic member 70, and the housing 80 are formed of non-magnetic stainless steel. The upper yoke 20 and the lower yoke 60 are formed of a magnetic material including Fe and the like.

As illustrated in FIG. 1, the vibration generator according to the present embodiment has an approximately rectangular parallelepiped shape whose largest surface is parallel to the XY-plane. The vibration generator is formed such that the length in the X1-X2 direction (longitudinal direction) of the largest surface is 15 mm, the width in the Y1-Y2 direction (lateral direction) is 10 mm, and the height in the Z1-Z2 direction (height direction) is 3 mm.

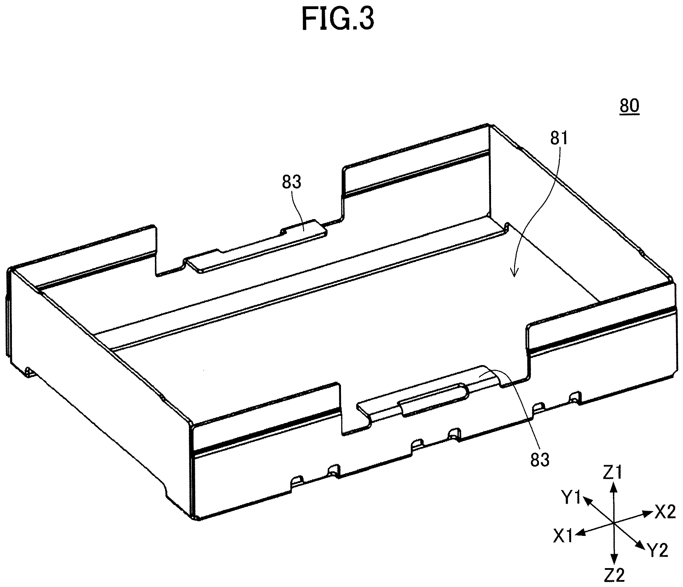

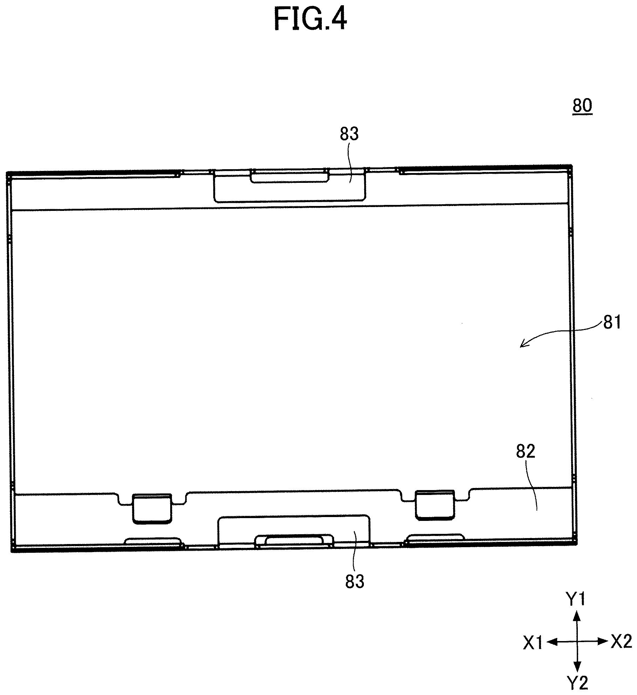

A casing of the vibration generator according to the present embodiment is configured by the housing 80 and the cover 10. As illustrated in FIG. 3 and FIG. 4, the housing 80 has an approximately rectangular frame shape, and has an opening 81 through the Z1-Z2 direction. Further, a bottom plate portion 82 parallel to the XY-plane is formed on the Y2 (Z2) side of the opening 81. Further, bracket support portions 83 are provided at the middle of the Y1 side and Y2 side of the housing 80.

The housing 80 accommodates the elastic member 70, the lower yoke 60, the magnet 50, the bracket 40, the coil 30, and the upper yoke 20, and the cover 10 is placed from the Z1 side (the upper side). Further, in the present application, the casing configured by the housing 80 or by the cover 10 and the housing 80 may be referred to as a case.

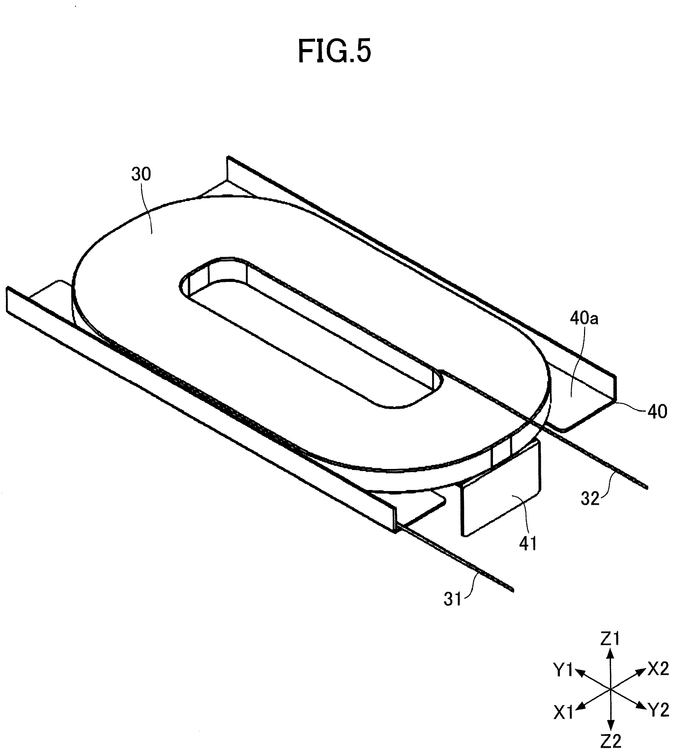

As illustrated in FIG. 5, the coil 30 is wound such that the coil 30 extends in the Y1-Y2 direction, and includes terminals 31 and 32 between which a current flows. The coil 30 is disposed on a surface 40a on the Z1 side of the bracket 40, and is fixed to the bracket 40. Further, housing attachment portions 41 for connection to the housing 80 are formed on the Y1 side and Y2 side of the bracket 40, so as to extend in the Z2 direction. Note that the bracket 40 is formed by punching and bending a metal plate such as non-magnetic stainless steel.

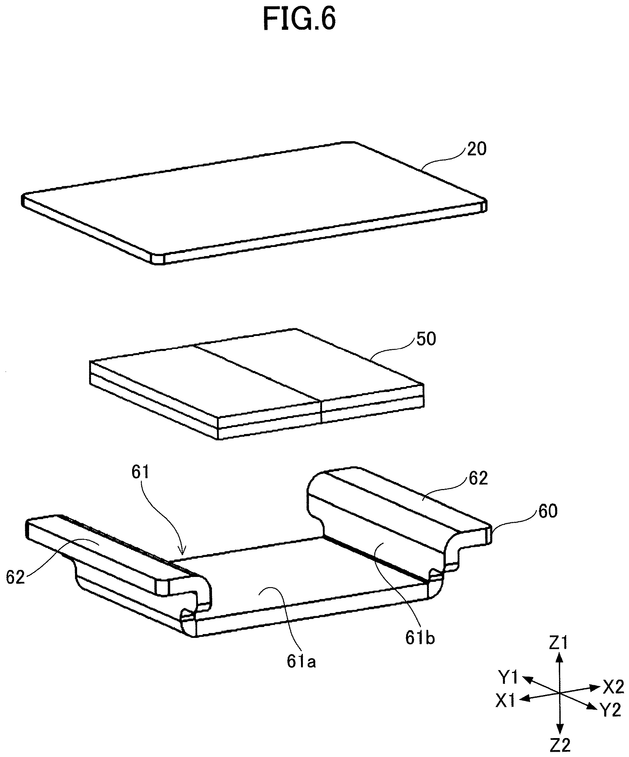

As illustrated in FIG. 6, the upper yoke 20 has a rectangular flat plate shape whose longitudinal direction is the X1-X2 direction and the lateral direction is the Y1-Y2 direction. The lower yoke 60 has a recessed portion 61 whose longitudinal direction is the X1-X2 direction and that is recessed in the Z2 direction. Side surfaces 61b extending from a bottom surface 61a in the Z1 direction are formed on the X1 side and on the X2 side of the recessed portion 61 of the lower yoke 60. Further, connecting portions 62 extend outwardly relative to the side surfaces 61b in the X1 direction and the X2 direction. On the Z1 side of the magnet 50, the X1 side of the magnet 50 is the S-pole and the X2 side is the N-pole. On the Z2 side of the magnet 50, the X1 side of the magnet 50 is the N-pole and the X2 side is the S-pole.

When a vibrator of the vibration generator according to the present embodiment is assembled, the magnet 50 is attached to the bottom surface 61a of the recessed portion 61 of the lower yoke 60. Further, the connecting portions 62 of the lower yoke 60 are joined to the upper yoke 20. In the present embodiment, the lower yoke 60 and the upper yoke 20, located in the surroundings of the magnet 50, are separate members, thus allowing the vibrator to be readily assembled.

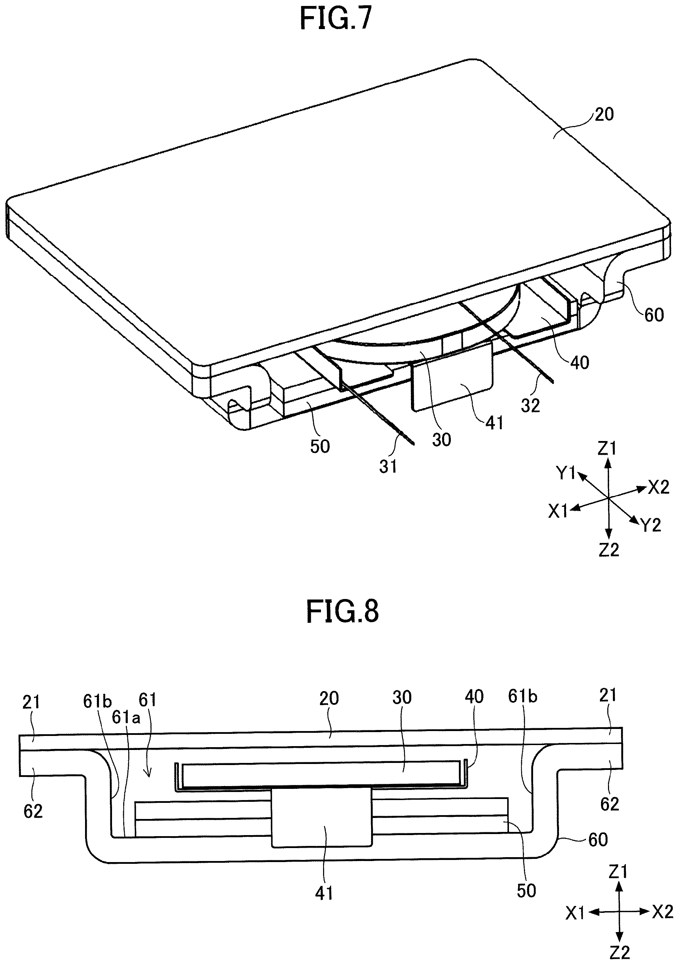

As illustrated in FIG. 7 and FIG. 8, the surface on the Z2 side of the magnet 50 is joined to the bottom surface 61a of the recessed portion 61 of the lower yoke 60, and the surfaces on the Z1 side of the connecting portions 62, which are located on the X1 side and the X2 side of the lower yoke 60, are joined to connecting portions 21 of the upper yoke 20. Further, the coil 30, which is fixed to the bracket 40, is provided on the Z1 side relative to the magnet 50, within a region defined by the recessed portion 61 between the lower yoke 60 and the upper yoke 20.

The bracket 40 is attached to the housing 80 by inserting the housing attachment portions 41 of the bracket 40 into openings of the bracket support portions 83 of the housing 80. Accordingly, the vibrator is formed by the upper yoke 20, the magnet 50, and the lower yoke 60. However, the vibrator is not connected to either the bracket 40 or the coil 30.

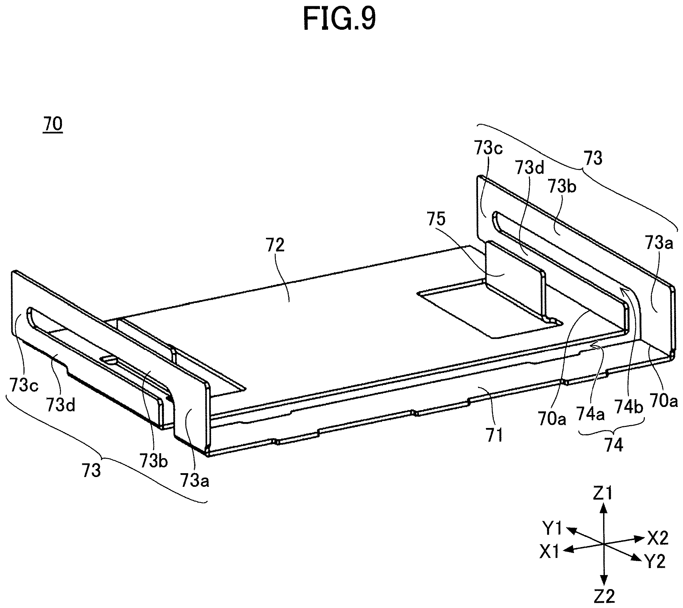

As illustrated in FIG. 9, the elastic member 70 includes a housing connection portion 71, a vibrator support portion 72, and spring portions 73. The housing connection portion 71 is fixed to the housing 80 by connecting the surface on the Z2 side of the housing connection portion 71 to the surface on the Z1 side of the bottom plate portion 82 of the housing 80. Further, the Z2 side of the vibrator, formed by the upper yoke 20, the magnet 50, and the lower yoke 60, is joined and fixed to the Z1 side of the vibrator support portion 72. The spring portions 73 are provided between the housing connection portion 71 and the vibrator support portion 72.

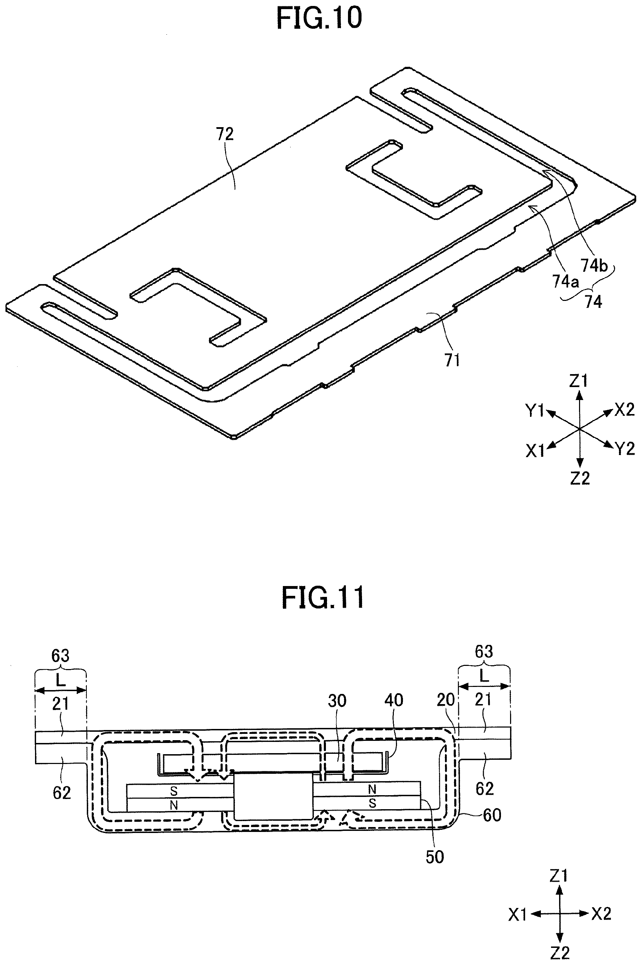

The elastic member 70 is formed as follows. First, a metal plate such as non-magnetic stainless steel having a thickness of 0.1 mm is punched to obtain a punched metal plate as illustrated in FIG. 10. Next, the elastic member 70 as illustrated in FIG. 9 is formed by bending the punched metal plate. The spring portions 73 are formed by bending both ends on the X1 side and the X2 side of the punched metal plate illustrated in FIG. 10 approximately perpendicularly with respect to bend lines 70a (the bend lines 70a are illustrated in FIG. 9), which are parallel to the Y1-Y2 direction. In the elastic member 70, the housing connection portion 71 and the vibrator support portion 72 are in the same plane.

The metal plate forming the elastic member 70 has a groove 74, which is formed by punching the metal plate. The housing connection portion 71 and the vibrator support portion 72 are separated by a first groove 74a of the groove 74. The first groove 74a of the groove 74 extends in the X1-X2 direction, and is perpendicular to the Y1-Y2 direction in which the bend lines 70a extend. Accordingly, the housing connection portion 71 is formed on the Y2 side of the first groove 74a of the groove 74, and the vibrator support portion 72 is formed on the Y1 side of the first groove 74a of the groove 74.

Further, the spring portions 73 are formed approximately in parallel to the YZ-plane. The groove 74 includes a second groove 74b that extends in the Y1-Y2 direction, and the second groove 74b is formed in each of the spring portions 73, thus allowing the spring portions 73 to have desired elasticity. The spring portions 73 each include a first region 73a connected to the housing connection portion 71 and extending from the housing connection portion 71 in the Z1 direction; a second region 73b extending from the first region 73a in the Y1 direction; a third region 73c extending from the second region 73b in the Z2 direction; and a fourth region 73d connecting the third region 73c to the vibrator support portion 72 and extending in the Y1-Y2 direction. The second region 73b and the fourth region 73d are separated by the second groove 74b that extends in the Y1-Y2 direction, and the second region 73b extends in the Y1-Y2 direction and in particular, functions as a spring. Accordingly, the second region 73b of each of the spring portions 73 extends in a direction parallel to the bend lines 70a.

When an elastic member such as a spring is formed by bending a metal plate, it would be difficult to bend the metal plate at an angle of approximately 180° in terms of manufacturing. Further, due to the decreased strength of the bent portion, the metal plate would be readily damaged when vibrated. In view of the above, in the present embodiment, the elastic member 70 is formed by bending a metal plate at approximately 90°, in order to enable easy manufacturing and to prevent a decrease in strength. Accordingly, the vibration generator can be readily manufactured and reliability can also be improved.

Further, the vibrator is joined to the vibrator support portion 72. The vibrator support portion 72 is provided with bent portions 75 that are formed by causing portions on the X1 side and the X2 side of the vibrator support portion 72 to be bent approximately perpendicularly. The bent portions 75 are situated on the X1 side and the X2 side of the vibrator. The bent portions 75 may be used as marks for alignment when the vibrator is attached to the vibrator support portion 72, or may be used as support portions for supporting the X1 side and the X2 side of the vibrator.

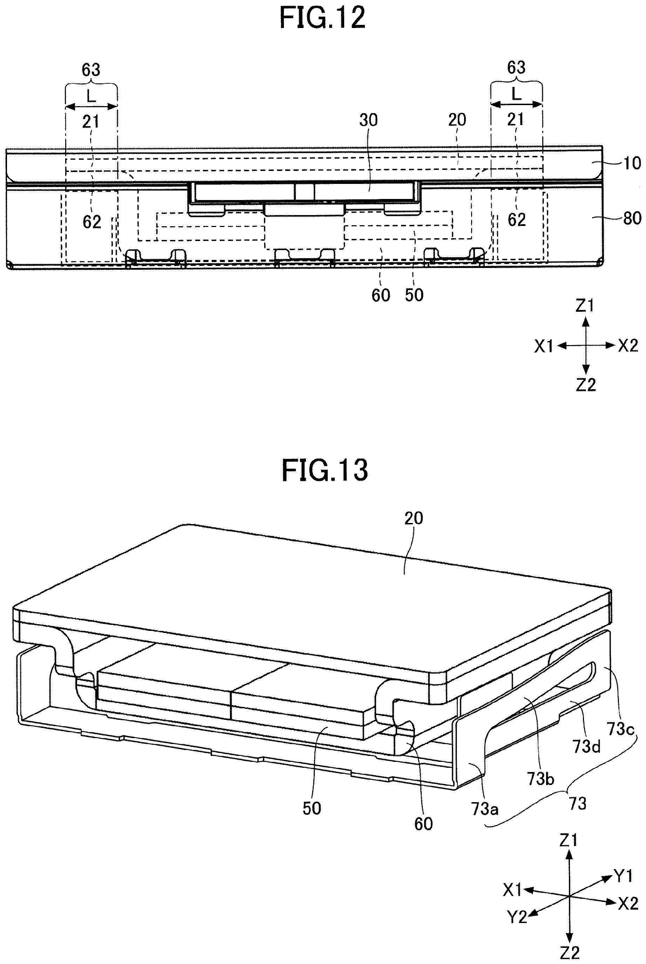

Next, the generation of a vibration by the vibration generator according to the present embodiment will be described. FIG. 11 depicts the vibrator, formed by the upper yoke 20, the magnet 50, and the lower yoke 60, and also the coil 30 and the bracket 40 provided within a space between the lower yoke 60 and the upper yoke 20, of the vibration generator according to the present embodiment. Dashed arrows in FIG. 11 indicate magnetic lines of force generated by the magnetic field of the magnet 50. FIG. 12 is a front view of the vibration generator according to the present embodiment.

Specifically, on the X1 side of the magnet 50, a magnetic line of force is directed from the N-pole on the Z2 side into the S-pole on the X1 side of the magnet 50, through the inside of the lower yoke 60, the inside of the upper yoke 20, and a space between the upper yoke 20 and the S-pole on the X1 side of the magnet 50. Further, on the X2 side of the magnet 50, a magnetic line of force is directed from the N-pole on the Z1 side into the S-pole on the X2 side of the magnet 50, through a space between the N-pole on the X2 side of the magnet 50 and the upper yoke 20, the inside of the upper yoke 20, and the inside of the lower yoke 60. Further, a magnetic line of force directed from the N-pole into the S-pole is present on the Z1 side of the magnet 50, and a magnetic line of force directed from the N-pole into the S-pole is present on the Z2 side of the magnet 50.

Accordingly, the magnetic lines of force concentrate in the space between the upper yoke 20 and the lower yoke 60, and the magnetic field is thus strong. The coil 30 is provided in this space. In the present embodiment, an alternating current flowing between the terminal 31 and the terminal 32 allows the vibrator, formed by the upper yoke 20, the magnet 50, and the lower yoke 60, to vibrate in the X1-X2 direction.

For example, when a current is applied such that the terminal 31 of the coil 30 becomes positive and the terminal 32 becomes negative, the vibrator, formed by the upper yoke 20, the magnet 50, and the lower yoke 60, moves in the X2 direction. Further, when a current is applied such that the terminal 31 of the coil 30 becomes negative and the terminal 32 becomes positive, the vibrator, formed by the upper yoke 20, the magnet 50, and the lower yoke 60, moves in the X1 direction. Therefore, the vibrator, formed by the upper yoke 20, the magnet 50, and the lower yoke 60, can vibrate in the X1-X2 direction by applying a current such that the terminal 31 and the terminal 32 of the coil 30 become alternately positive and negative. Note that the coil 30 and the bracket 40 do not vibrate because the bracket 40, to which the coil 30 is fixed, is separated from the vibrator.

As the weight of the vibrator increases, the resulting generated vibration is stronger. For this reason, the weight of the vibrator is increased by increasing the length in the X1-X2 direction of each of the connecting portions 21 of the upper yoke 20, to which the connecting portions 62 of the lower yoke 60 are connected. In the present application, the connecting portions 62 of the lower yoke 60 and the connecting portions 21 of the upper yoke 20, to which the connecting portions 62 are connected, may be collectively referred to as "extended regions 63". In the present embodiment, the length L in the X1-X2 direction of each of the extended regions 63 is approximately 1.3 mm, and the weight of the vibrator is increased by the weight of the extended regions 63 formed on both sides. The thickness of the upper yoke 20 is 0.3 mm, and the thickness of the lower yoke 60 is 0.5 mm. Thus, the lower yoke 60 is thicker than the upper yoke 20.

In the present embodiment, the weight of the vibrator, formed by the upper yoke 20, the magnet 50, and the lower yoke 60, is 1.03 g. Further, when the vibrator is vibrated at the natural frequency of 99 Hz, a stroke length of ±1.2 mm, that is, the total stroke length of 2.4 mm in the X1-X2 direction can be obtained. As a result, a strong vibration can be obtained. FIG. 13 depicts a state in which the vibrator is displaced after the vibration generator is vibrated. As illustrated in FIG. 13, the second region 73b of each of the spring portions 73 of the elastic member 70 is largely deformed, indicating that the second region 73b serves as a main elastic region and functions as a spring.

The extended regions 63 formed by the upper yoke 20 and the lower yoke 60 preferably extend in the vibration direction, outwardly relative to the recessed portion 61 of the lower yoke 60. In the present embodiment, the X1-X2 direction is the vibration direction. In the Y1-Y2 direction perpendicular to the vibration direction, the bracket 40 supporting the coil 30 is connected to the housing 80. Thus, it would be difficult to form extended regions with sufficient mass in the Y1-Y2 direction. Further, if extended regions are formed in the Z1-Z2 direction, the height of the vibration generator would be increased, thus failing to satisfy downsizing requirements. Accordingly, the extended regions 63 are formed in the X1-X2 direction, which is the vibration direction.

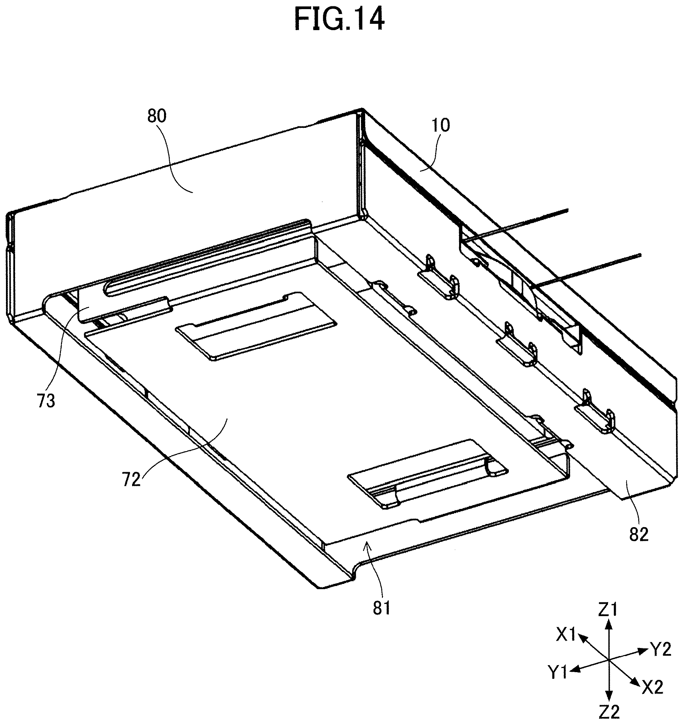

As illustrated in FIG. 14, in the vibration generator according to the present embodiment, the housing 80 has the opening 81 in a region corresponding to the vibrator support portion 72 of the elastic member 70. That is, on the Z2 side of the housing 80, the opening 81 is formed in the region corresponding to the vibrator support portion 72 of the elastic member 70. Accordingly, because the housing 80 has the opening 81 in the region corresponding to the vibrator support portion 72 of the elastic member 70, the housing 80 does not contact the vibrator support portion 72 of the elastic member 70, and thus does not hinder the vibration of the vibrator. Specifically, in the present embodiment, the housing connection portion 71 of the elastic member 70 and the vibrator support portion 72 are in the same plane. Therefore, if the housing 80 has a bottom plate portion in the region where the vibrator support portion 72 is situated, the bottom plate portion of the housing 80 would contact the vibrator support portion 72, and friction would be generated when the vibrator is vibrated, thus causing the vibration of the vibrator to be hindered. In the present embodiment, the housing 80 has the opening 81 in the region corresponding to the vibrator support portion 72 of the elastic member 70. Accordingly, the housing 80 does not contact the vibrator support portion 72 of the elastic member 70, and thus, does not affect the vibration of the vibrator.

Further, it may be contemplated that an elastic member may be formed such that a vibrator support portion is situated on the Z2 side relative to a housing connection portion, thereby providing a level difference between the housing connection portion and the vibrator support portion. In this case, even if the housing has a bottom plate portion in a region in which the vibrator support portion is situated, a gap is formed between the vibrator support portion and the bottom plate portion of the housing. Thus, the vibration of the vibrator would not be hindered.

However, in the above case, because bend lines for forming the housing connection portion are out of line with bend lines for forming the vibrator support portion, manufacturing processes and time would be increased, thus resulting in an increase in costs. Further, in the above case, the height in the Z1-Z2 direction of the vibration generator would be increased by the height of the gap between the vibrator support portion and the bottom plate of the housing. Therefore, the size of the vibration generator would be increased.

Conversely, in the vibration generator according to the present embodiment, the bend lines for forming the housing connection portion 71 are in line with the bend lines for forming the vibrator support portion 72. Therefore, the vibration generator can be readily manufactured at low costs. Further, the height of the vibration generator can be decreased by the height of the above-described gap. Thus, the size of the vibration generator can be reduced.

### (Variation)

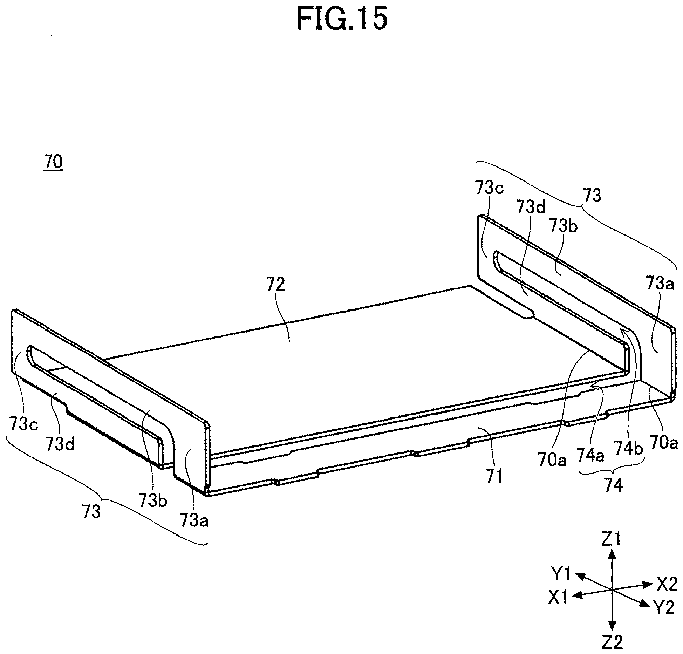

Next, a variation of the present embodiment will be described with reference to FIG. 15. As illustrated in FIG. 15, in a case where there is no need to provide either marks for alignment when the vibrator is attached to the vibrator support portion 72 or support portions for supporting the X1 side and the X2 side of the vibrator, the elastic member 70 is not required to include bent portions 75. If the elastic member 70 does not include bent portions 75, a bending process for forming bent portions 75 becomes unnecessary, thus allowing the elastic member 70 to be more readily manufactured at lower costs. Accordingly, the cost of the vibration generator can be further reduced.

### [Second Embodiment]

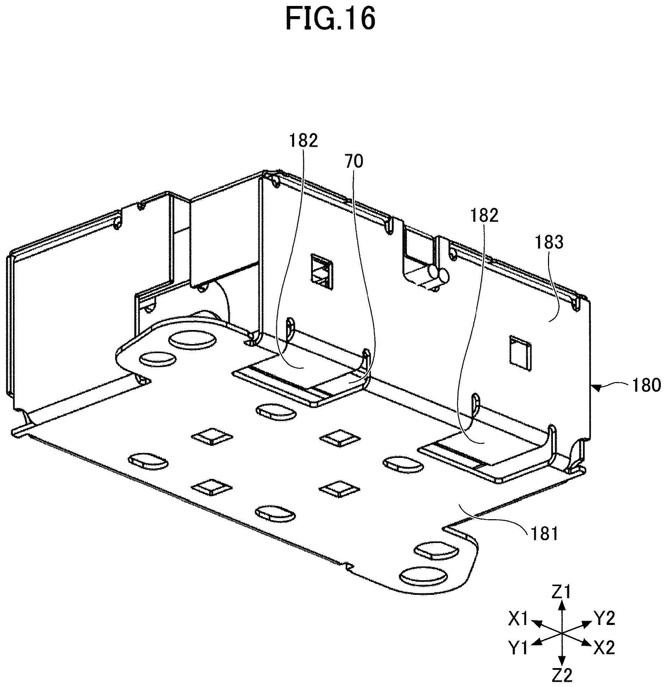

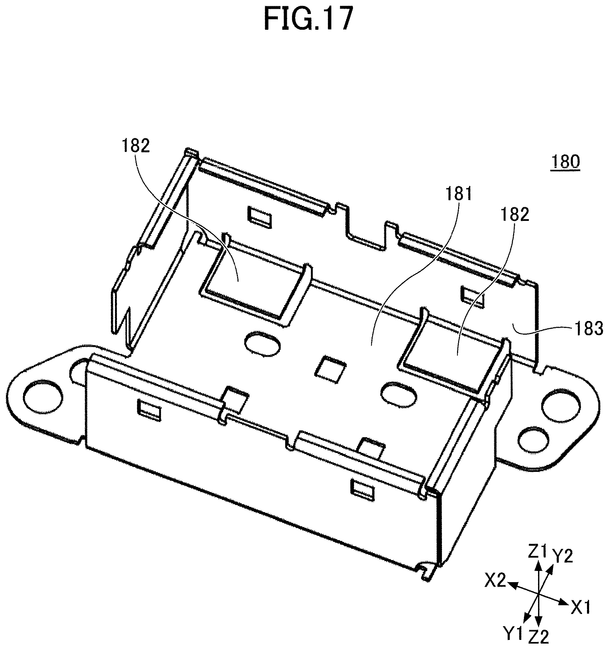

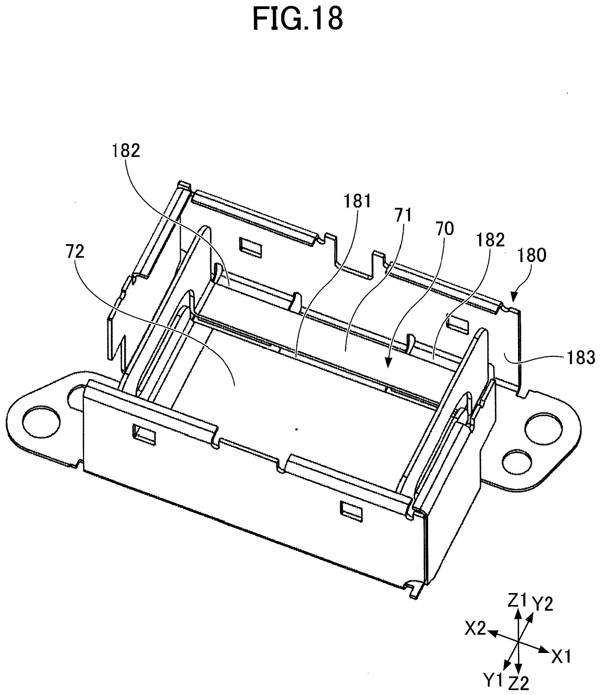

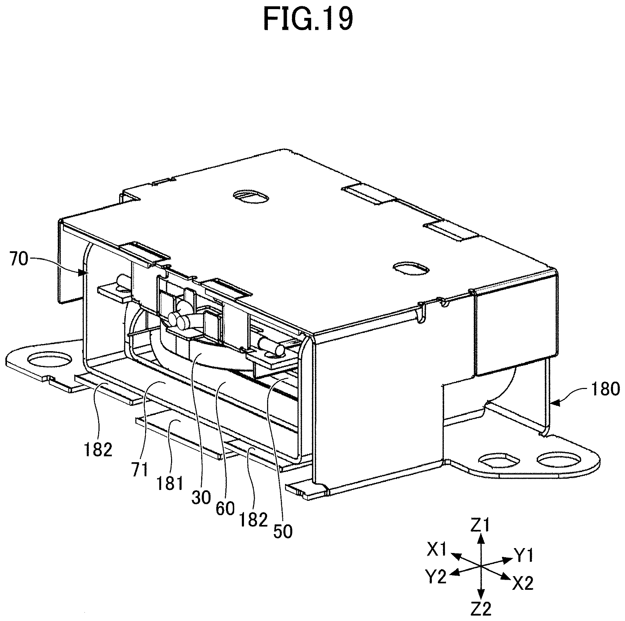

Next, a vibration generator according to a second embodiment will be described with reference to FIG. 16 through FIG. 19. FIG. 16 is a perspective view of the vibration generator, viewed from the bottom side, according to the second embodiment. FIG. 17 is a perspective view of a housing 180 of the vibration generator according to the second embodiment. FIG. 18 is a perspective view of the housing 180 to which the elastic member 70 is attached. FIG. 19 is a perspective, cross-sectional view of the vibration generator according to the second embodiment.

The vibration generator according to the present embodiment differs from that of the first embodiment, in that the housing 180 does not have a large opening through the Z1-Z2 direction. Specifically, the housing 180 has an approximately rectangular parallelepiped shape, and includes a bottom surface 181 and bottom surface support portions 182, which are provided on the Z2 side and parallel to the XY-plane, and also includes four side surfaces parallel to the YZ-plane or the ZX-plane. In the present application, a casing formed by the housing 180 or by the cover 10 and the housing 180 may be referred to as a case.

The bottom surface support portions 182 are tongues that are bent from a side surface 183 so as to be parallel to the XY-plane. The side surface 183, of the side surfaces of the housing 180, is situated on the Y2 side and extends in the Z1 direction (toward the upper side) from the bottom surface 181. Accordingly, the bottom surface 181 and the bottom surface support portions 182 are in parallel.

Similar to the bottom plate portion 82 according to the first embodiment, the housing 180 includes the bottom surface support portions 182 on the Y2 side such that the housing connection portion 71 of the elastic member 70 is connected and fixed to the bottom surface support portions 182. Accordingly, the surface on the Z2 side of the housing connection portion 71 of the elastic member 70 is connected and fixed to the surfaces on the Z1 side of the bottom surface support portions 182 of the housing 180.

The bottom surface support portions 182 are provided on the Z1 side by 1 mm to 2 mm relative to the bottom surface 181. The bottom surface support portions 182 are connected to the housing connection portion 71 of the elastic member 70 so as to support the elastic member 70. The bottom surface 181 covers the approximately entire vibrator support portion 72 of the elastic member 70. By providing the housing 180 with the bottom surface 181 that covers the entire vibrator support portion 72 of the elastic member 70, it is possible to prevent the vibrator support portion 72 of the elastic member 70 from contacting other external members. Further, the strength of the housing 180 can be increased by providing the housing 180 with the bottom surface 181.

As described above, in the present embodiment, the bottom surface support portions 182 of the housing 180 is provided below the vibrator support portion 72 of the elastic member 70, and the bottom surface 181 is provided below the bottom surface support portions 182. That is, on the Z2 side of the housing 180, the bottom surface 181 is provided below the vibrator support portion 72 of the elastic member 70, and the bottom surface 181 is provided below the bottom surface support portions 182.

Accordingly, a gap is formed between the bottom surface 181 of the housing 180 and the vibrator support portion 72 of the elastic member 70. Therefore, when the vibrator support portion 72 of the elastic member 70 is vibrated, the bottom surface 181 of the housing 180 does not contact and rub against the vibrator support portion 72, and thus, the housing 180 does not hinder the vibration of the vibrator support portion 72.

In the present embodiment, the housing connection portion 71 of the elastic member 70 is attached to the upper surfaces of the bottom surface support portions 182 of the housing 180. However, the housing connection portion 71 of the elastic member 70 may be attached to the lower surfaces of the bottom surface support portions 182 of the housing 180, as long as a gap is formed between the vibrator support portion 72 of the elastic member 70 and the bottom surface 181 of the housing 180.

Although the embodiments have been specifically described above, the present invention is not limited to the specific embodiments and various modifications and variations may be made without departing from the scope of the present invention as defined by the appended claims.

### DESCRIPTION OF THE REFERENCE NUMERAL

- 10: cover
- 20: upper yoke
- 21: connecting portions
- 30: coil
- 31, 32: terminals
- 40: bracket
- 41: housing attachment portions
- 50: magnet
- 60: lower yoke
- 61: recessed portion
- 61a: bottom surface
- 61b: side surfaces
- 62: connecting portions
- 63: extended regions
- 70: elastic member
- 70a: bend lines
- 71: housing connection portion
- 72: vibrator support portion
- 73: spring portions
- 73a: first region
- 73b: second region
- 73c: third region
- 73d: fourth region
- 74: groove
- 74a: first groove
- 74b: second grooves
- 75: bent portions
- 80: housing
- 81: opening
- 82: bottom plate portion
- 83: bracket support portions

## Claims

1. A vibration generator comprising:
a housing (80, 180);
a vibrator (20, 50, 60);
an elastic member (70) that connects the housing (80, 180) and the vibrator (20, 50, 60); and
a driving means (30, 50) that causes the vibrator (20, 50, 60) to vibrate, wherein the elastic member (70) includes a housing connection portion (71) that is connected to the housing (80, 180), a vibrator support portion (72) that supports the vibrator (20, 50, 60), and a spring portion (73) that connects the housing connection portion (71) and the vibrator support portion (72),
the housing connection portion (71) is coplanar with the vibrator support portion (72), and
the spring portion (73) is formed so as to be approximately perpendicular to the housing connection portion (71) and the vibrator support portion (72),
wherein the driving means (30, 50) includes a magnet (50) and a coil (30), the magnet (50) being included in the vibrator (20, 50, 60) and the coil (30) being fixed to the housing (80),
**characterized in that**:
the vibrator (20, 50, 60) includes the magnet (50), an upper yoke (20), and a lower yoke (60), the upper yoke (20) being provided above the magnet (50) and the lower yoke (60) being provided below the magnet (50), and
wherein the coil (30) is provided between the upper yoke (20) and the magnet (50).

2. The vibration generator according to claim 1, wherein the housing (80, 180) has an opening in a region corresponding to the vibrator support portion (72) of the elastic member (70), the opening being on a side of the housing (80, 180) where the vibrator support portion (72) of the elastic member (70) is situated.

3. The vibration generator according to claim 1, wherein the housing (180) includes a bottom surface (181) and a bottom surface support portion (182), the bottom surface (181) being located below the elastic member (70) and the bottom surface support portion (182) being located above the bottom surface (181),
the housing connection portion (71) of the elastic member (70) is attached to the bottom surface support portion (182) of the housing (180), and
a gap is formed between the vibrator support portion (72) of the elastic member (70) and the bottom surface (181) of the housing (180).

4. The vibration generator according to claim 3, wherein the housing (180) includes a side surface (183) that is connected to the bottom surface (181) and extends upward from the bottom surface (181), and
the bottom surface support portion (182) is a tongue that is bent from the side surface so as to be parallel to the bottom surface (181).

5. The vibration generator according to claim 1, wherein the elastic member (70) is formed by bending a metal plate, and
the spring portion (73) includes an elastic region that extends in parallel to a bend line along which the spring portion (73) is bent.

6. The vibration generator according to claim 5, further comprising a groove (74), the groove (74) being provided in the metal plate that forms the elastic member (70),
wherein the housing connection portion (71) and the vibrator support portion (72) are separated by the groove (74).

7. The vibration generator according to claim 5, further comprising a bent portion (75) formed by bending the metal plate, the bent portion (75) being formed on the vibrator support portion (72) so as to support the vibrator (20, 50, 60) in a vibration direction or to align the vibrator (20, 50, 60) when the vibrator (20, 50, 60) is attached to the vibrator support portion (72).

## Patentansprüche

1. Vibrationsgenerator, umfassend:
ein Gehäuse (80, 180);
einen Vibrator (20, 50, 60);
ein elastisches Element (70), welches das Gehäuse (80, 180) und den Vibrator (20, 50, 60) verbindet; und
ein Antriebsmittel (30, 50), das den Vibrator (20, 50, 60) in Vibrationen versetzt,
wobei das elastische Element (70) einen Gehäuseverbindungsabschnitt (71), der mit dem Gehäuse (80, 180) verbunden ist, einen Vibratorstützabschnitt (72), der den Vibrator (20, 50, 60) stützt, und einen Federabschnitt (73), der den Gehäuseverbindungsabschnitt (71) und den Vibratorstützabschnitt (72) verbindet, umfasst,
der Gehäuseverbindungsabschnitt (71) koplanar mit dem Vibratorstützabschnitt (72) verläuft und
der Federabschnitt (73) so ausgebildet ist, dass er ungefähr senkrecht zu dem Gehäuseverbindungsabschnitt (71) und dem Vibratorstützabschnitt (12) verläuft,
wobei das Antriebsmittel (30, 50) einen Magneten (50) und eine Spule (30) umfasst, wobei der Magnet (50) in dem Vibrator (20, 50, 60) enthalten ist und die Spule (30) an dem Gehäuse (80) befestigt ist,
**dadurch gekennzeichnet, dass**:
der Vibrator (20, 60, 50) den Magneten (50), ein oberes Joch (20) und ein unteres Joch (60) umfasst, wobei das obere Joch (20) oberhalb des Magneten (50) angeordnet ist und das untere Joch (60) unterhalb des Magneten (50) angeordnet ist, und
wobei die Spule (30) zwischen dem oberen Joch (20) und dem Magneten (50) angeordnet ist.

2. Vibrationsgenerator nach Anspruch 1, wobei das Gehäuse (80, 180) eine Öffnung in einer Region aufweist, die dem Vibratorstützabschnitt (72) des elastischen Elements (70) entspricht, wobei sich die Öffnung auf einer Seite des Gehäuses (80, 180) befindet, wo der Vibratorstützabschnitt (72) des elastischen Elements (70) angeordnet ist.

3. Vibrationsgenerator nach Anspruch 1, wobei das Gehäuse (180) eine Bodenfläche (181) und einen Bodenflächenstützabschnitt (182) aufweist, wobei die Bodenfläche (181) unterhalb des elastischen Elements (70) angeordnet ist und der Bodenflächenstützabschnitt (182) oberhalb der Bodenfläche (181) angeordnet ist,
wobei der Gehäuseverbindungsabschnitt (71) des elastischen Elements (70) an dem Bodenflächenstützabschnitt (182) des Gehäuses (180) angebracht ist und
wobei ein Spalt zwischen dem Vibratorstützabschnitt (72) des elastischen Elements (70) und der Bodenfläche (181) des Gehäuses (180) ausgebildet ist.

4. Vibrationsgenerator nach Anspruch 3, wobei das Gehäuse (180) eine Seitenfläche (183) umfasst, die mit der Bodenfläche (181) verbunden ist und sich von der Bodenfläche (181) nach oben erstreckt, und
wobei der Bodenflächenstützabschnitt (182) eine Zunge ist, die von der Seitenfläche her so gebogen ist, dass sie parallel zu der Bodenfläche (181) verläuft.

5. Vibrationsgenerator nach Anspruch 1, wobei das elastische Element (70) durch Biegen einer Metallplatte gebildet ist, und
wobei der Federabschnitt (73) eine elastische Region umfasst, die sich parallel zu einer Biegelinie erstreckt, entlang der der Federabschnitt (73) gebogen wird.

6. Vibrationsgenerator nach Anspruch 5, des Weiteren umfassend eine Nut (74), wobei die Nut (74) in der Metallplatte ausgebildet ist, die das elastische Element (70) bildet, wobei der Gehäuseverbindungsabschnitt (71) und der Vibratorstützabschnitt (72) durch die Nut (74) getrennt sind.

7. Vibrationsgenerator nach Anspruch 5, des Weiteren umfassend einen gebogenen Abschnitt (75), der durch Biegen der Metallplatte gebildet ist, wobei der gebogene Abschnitt (75) an dem Vibratorstützabschnitt (72) so ausgebildet ist, dass er den Vibrator (20, 50, 60) in einer Vibrationsrichtung stützt oder den Vibrator (20, 60, 50) ausrichtet, wenn der Vibrator (20, 50, 60) an dem Vibratorstützabschnitt (72) angebracht ist.

## Revendications

1. Générateur de vibrations comprenant :
un boîtier (80, 180) ;
un vibrateur (20, 50, 60) ;
un organe élastique (70) qui raccorde le boîtier (80, 180) et le vibrateur (20, 50, 60) ; et
un moyen d'entraînement (30, 50) qui amène le vibrateur (20, 50, 60) à vibrer,
dans lequel l'organe élastique (70) comporte une portion de raccordement de boîtier (71) qui est raccordée au boîtier (80, 180), une portion de support de vibrateur (72) qui supporte le vibrateur (20, 50, 60), et une portion de ressort (73) qui raccorde la portion de raccordement de boîtier (71) et la portion de support de vibrateur (72), la portion de raccordement de boîtier (71) est coplanaire avec la portion de support de vibrateur (72), et
la portion de ressort (73) est formée de façon à être approximativement perpendiculaire à la portion de raccordement de boîtier (71) et à la portion de support de vibrateur (72),
dans lequel le moyen d'entraînement (30, 50) comporte un aimant (50) et une bobine (30), l'aimant (50) étant inclus dans le vibrateur (20, 50, 60) et la bobine (30) étant fixée au boîtier (80),
**caractérisé en ce que** :
le vibrateur (20, 50, 60) comporte l'aimant (50), une culasse supérieure (20), et une culasse inférieure (60), la culasse supérieure (20) étant prévue au-dessus de l'aimant (50) et la culasse inférieure (60) étant prévue en dessous de l'aimant (50), et
dans lequel la bobine (30) est prévue entre la culasse supérieure (20) et l'aimant (50).

2. Générateur de vibrations selon la revendication 1, dans lequel le boîtier (80, 180) a une ouverture dans une région correspondant à la portion de support de vibrateur (72) de l'organe élastique (70), l'ouverture se trouvant sur un côté du boîtier (80, 180) où est située la portion de support de vibrateur (72) de l'organe élastique (70).

3. Générateur de vibrations selon la revendication 1, dans lequel le boîtier (180) comporte une surface de dessous (181) et une portion de support de surface de dessous (182), la surface de dessous (181) étant située en dessous de l'organe élastique (70) et la portion de support de surface de dessous (182) étant située au-dessus de la surface de dessous (181),
la portion de raccordement de boîtier (71) de l'organe élastique (70) est attachée à la portion de support de surface de dessous (182) du boîtier (180), et
un écartement est formé entre la portion de support de vibrateur (72) de l'organe élastique (70) et la surface de dessous (181) du boîtier (180).

4. Générateur de vibrations selon la revendication 3, dans lequel le boîtier (180) comporte une surface de côté (183) qui est raccordée à la surface de dessous (181) et s'étend vers le haut depuis la surface de dessous (181), et
la portion de support de surface de dessous (182) est une languette qui est pliée depuis la surface de côté de façon à être parallèle à la surface de dessous (181).

5. Générateur de vibrations selon la revendication 1, dans lequel l'organe élastique (70) est formé en pliant une plaque en métal, et
la portion de ressort (73) comporte une région élastique qui s'étend en parallèle à une ligne de pliage le long de laquelle la portion de ressort (73) est pliée.

6. Générateur de vibrations selon la revendication 5, comprenant en outre une rainure (74), la rainure (74) étant prévue dans la plaque en métal qui forme l'organe élastique (70),
dans lequel la portion de raccordement de boîtier (71) et la portion de support de vibrateur (72) sont séparées par la rainure (74).

7. Générateur de vibrations selon la revendication 5, comprenant en outre une portion pliée (75) formée en pliant la plaque en métal, la portion pliée (75) étant formée sur la portion de support de vibrateur (72) de façon à supporter le vibrateur (20, 50, 60) dans une direction de vibration ou à aligner le vibrateur (20, 50, 60) lorsque le vibrateur (20, 50, 60) est attaché à la portion de support de vibrateur (72).
